# EUROPEAN PATENT APPLICATION

(11) **EP 3 176 961 A1**
(43) Date of publication of application: **07.06.2017**
(21) Application number: 14898832.2
(22) Date of filing: 30.07.2014
(51) Int. Cl.: H04B 7/24, H04B 17/00

(54) **DISTRIBUTED RADIO BASE STATION**

(30) Priority: 29.07.2014 KR 20140096532
(71) Applicant: CMAXWIRELESS.CO.,LTD., Buk-gu Daegu 702-832 (KR)
(72) Inventor: CHAE, Young-su, Daegu 706-968 (KR); SUNG, Min-ho, Yongin-si Gyeonggi-do 448-534 (KR); CHAE, Dong-hoon, Suwon-si Gyeonggi-do 442-828 (KR)
(74) Representative: Walaski, Jan Filip
(86) International application number: PCT/KR2014/006974
(87) International publication number: WO 2016/017835

(57) **Abstract**

The present invention relates to a distributed radio base station, and provides a distributed radio base station, including: one or more base units (BUs) configured to process digital signals; and one or more radio units (RUs) installed in one or more target service areas, and configured to wirelessly communicate with user equipment; wherein each of the BUs is coupled to a cell group, composed of a set of RU groups each formed by grouping one or more of the RUs, over a transport network, and transmits the same burst data to one of the RU groups or the cell group.

## Description

### Technical Field

The present invention relates to a distributed radio base station, and more particularly to a distributed radio base station that is constructed in such a manner as to distribute one or more base units (BUs) and radio units (RUs), wherein the RUs are organized into a plurality of groups, and one or more cell groups are each composed of a set of groups, thereby enabling data to be efficiently processed and also enabling resources to be efficiently used.

### Background Art

With the development of radio communication and network technologies, technologies for constructing a radio base station in a distributed form have been recently proposed.

The technologies for constructing a radio base station in a distributed form are based on a scheme in which a digital unit (DU) configured to process digital signals and a radio unit (RU) disposed at a remote location are separated from each other, the DU is installed in a data center and the RU is installed in a remote target service area, the DU and the RU are connected to each other, and then data is transmitted and received.

Korean Patent Application Publication No. 10-2013-0051873 relates to "a Radio Base Station and a Data Processing Method therefor," and discloses the radio base station including: a group DU configured to include a plurality of digital units (DUs); and a plurality of Remote Radio Frequency Units (RRUs) connected to the group DU over a transport network and installed in respective target service areas; wherein each of the DUs includes a MAC function unit configured to perform a transmission/reception Medium Access Control (MAC) function, and each of the RRUs includes an encoder configured to encode downlink data received from each of the DUs. According to this technology, a plurality of DUs is grouped, a radio unit (RU) is connected by an optical cable over a transport network, and then data is processed, thereby providing the effect of reducing the amount of data that is transmitted and received.

However, the transport network is constructed using an optical cable and a coaxial cable via separate switching units, and thus this technology has limitations in that a system cannot be constructed using existing commercial IP network equipment or Ethernet network equipment at low cost and in that flexible multi-layer RU grouping and efficient interworking among a plurality of DUs and multi-layer RU groups cannot be performed using the multicasting/broadcasting function of an IP network or an Ethernet network.

### [Prior Art Document]

Korean Patent Application Publication No. 10-2013-0051873 (published on May 21, 2013)

### Disclosure

### Technical Problem

The present invention has been conceived to overcome the limitations of the prior art, and an object of the present invention is to provide a distributed radio base station in which RU groups are formed by grouping RUs, one or more cell groups are each composed of a set of RU groups, and one or more corresponding BUs are disposed for the one or more respective cell groups, thereby enabling the RUs and the BUs to be efficiently distributed and managed based on physical spaces or pieces of user equipment within target service areas and also enabling data to be efficiently transmitted and processed.

Another object of the present invention is to provide a distributed radio base station that is capable of increasing the efficiency of physical radio resources by using overlapping physical frequency/time resources.

A further object of the present invention is to provide a distributed radio base station that is capable of supporting a multi-carrier/Carrier Aggregation (CA) function by using a single RU, thereby enabling resources to be efficiently utilized.

Yet another object of the present invention is to provide a distributed radio base station that is capable of simultaneously supporting the frequency bands of a plurality of communication operators by using a single RU, thereby reducing the installation and maintenance costs of the base station.

### Technical Solution

In order to accomplish the above objects, the present invention provides a distributed radio base station, including: one or more base units (BUs) configured to process digital signals; and one or more radio units (RUs) installed in one or more target service areas, and configured to wirelessly communicate with user equipment; wherein each of the BUs is coupled to a cell group, composed of a set of RU groups each formed by grouping one or more of the RUs, over a transport network, and transmits the same burst data to one of the RU groups or the cell group.

In this case, one or more RUs belonging to the RU group or cell group may process the received burst data, and may transmit RF signals to the user equipment by using the same physical frequency/time resources.

When the cell group is composed of a set of a plurality of RU groups, the BU may transmit different pieces of burst data to respective groups of RUs included in the RU groups.

In this case, one or more RUs included in each of the RU groups may process the received burst data, and may transmit RF signals to the user equipment by using the same physical frequency/time resources.

One or more RUs belonging to a specific one of the RU groups may receive RF signals from the user equipment, may perform RF processing and L1 operation, and then may transmit processed data to a corresponding one of the BUs coupled over the transport network, and the BU may select or combine the data received from the one or more RUs.

When a single piece of user equipment is coupled to a plurality of RU groups, each of the RU groups may support one or more MIMO streams for the corresponding user equipment, and the individual RU groups may be combined and then support a plurality of MIMO streams for the corresponding user equipment.

Overlapping physical frequency/time resources may be allocated to a plurality of pieces of user equipment coupled to different RU groups by considering mutual signal interference between the RU groups.

For each of RU groups belonging to the cell group, test data may be transmitted only to RUs belonging to a specific one of the RU groups, and the mutual signal interference may be measured based on the signal strength of the test data received by RUs, belonging to one or more RU groups exclusive of the specific RU group, in a sniffering mode.

According to another aspect of the present invention, there is provided a distributed radio base station, including: one or more base units (BUs) configured to process digital signals; and one or more radio units (RUs) installed in one or more target service areas, and configured to wirelessly communicate with user equipment; wherein each of the RUs includes a plurality of L1 processing units and a plurality of RF processing units; and wherein each of the BUs is coupled to a cell group, composed of a set of RU groups each formed by grouping one or more of the RUs, over a transport network, and the RU groups are grouped according to different respective carriers.

According to still another aspect of the present invention, there is provided a distributed radio base station, including: one or more base units (BUs) configured to process digital signals; and one or more radio units (RUs) installed in one or more target service areas, and configured to wirelessly communicate with user equipment; wherein each of the RUs includes a plurality of L1 processing units and a plurality of RF processing units; and wherein each of the BUs is coupled to a cell group, composed of a set of RU groups each formed by grouping one or more of the RUs, over a transport network, and the RU groups are grouped according to different respective frequency bands.

### Advantageous Effects

According to the present invention, there may be provided a distributed radio base station in which RU groups are formed by grouping RUs, one or more cell groups are each composed of a set of RU groups, and one or more corresponding BUs are disposed for the one or more respective cell groups, thereby enabling the RUs and the BUs to be efficiently distributed and managed based on physical spaces or pieces of user equipment within target service areas and also enabling data to be efficiently transmitted and processed.

Furthermore, according to the present invention, there may be provided a distributed radio base station that is capable of increasing the efficiency of physical radio resources by using overlapping physical frequency/time resources.

Furthermore, according to the present invention, there may be provided a distributed radio base station that is capable of supporting a multi-carrier/Carrier Aggregation (CA) function by using a single RU, thereby enabling resources to be efficiently utilized.

Moreover, according to the present invention, there may be provided a distributed radio base station that is capable of simultaneously supporting the frequency bands of a plurality of communication operators by using a single RU, thereby reducing the installation and maintenance costs of the base station.

### Description of Drawings

FIG. 1 is a diagram illustrating the configuration of a distributed radio base station (100) according to the present invention;
FIG. 2 is a diagram showing the internal configuration of a radio unit (20);
FIG. 3 is a diagram illustrating the configuration of a distributed radio base station (100) according to an embodiment of the present invention;
FIG. 4 is a diagram illustrating a method of dynamically constructing S-groups (50) and cell groups (60);
FIG. 5 is a diagram showing the configuration of a distributed radio base station (100) according to another embodiment of the present invention;
FIG. 6 is a diagram showing an example of implementing an MU-MIMO/SDMA function in the distributed radio base station (100) according to the present invention;
FIG. 7 is a diagram illustrating a multi-carrier/Carrier Aggregation (CA) function in the distributed radio base station (100) according to the present invention; and
FIG. 8 is a diagram illustrating the function of supporting a plurality of communication operators in the radio base station (100) according to the present invention.

### Best Mode

Embodiments of the present invention will be described in detail below with reference to the accompanying drawings.

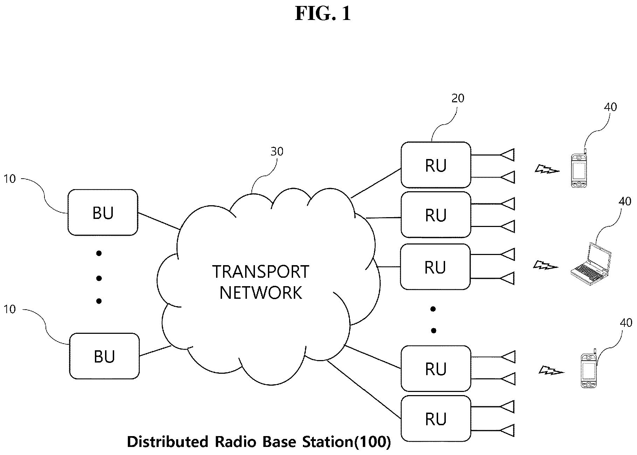

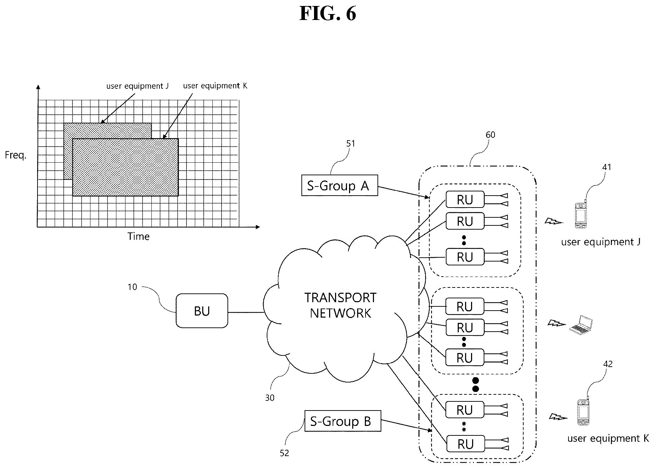

First, a distributed radio base station 100 according to the present invention will be described with reference to FIGS. 1 to 5. Thereafter, a data processing method and a construction method in the distributed radio base station 100 will be described with reference to FIGS. 6 to 8.

FIG. 1 is a diagram illustrating the configuration of the distributed radio base station 100 according to the present invention.

Referring to FIG. 1, the distributed radio base station 100 includes one or more BUs 10 and one or more RUs 20, and the BUs 10 and the RUs 20 are coupled with each other over a transport network 30.

The BUs 10 are connected to a core network (not shown), and function to process digital signals. The BUs 10 are generally installed in a central data center or the like, and transmit and receive data to and from the remote RUs 20 over the transport network 30. The BUs 10 are also commonly referred to as digital units (DUs).

In this case, the BUs 10 are logical units. Each of the BUs 10 may be formed as an independent physical unit, and a plurality of BUs 10 may be formed as a single physical unit. Furthermore, the BUs 10 perform the operations of layers equal to or higher than Layer 2 (L2) and Layer 3 (L3) of the OSI 7-layer model according to corresponding protocols.

The RUs 20 are installed in target service areas, wirelessly communicate with pieces of user equipment 40 in the target service areas, and transmit and receive data to and from the BUs 10 over the transport network 30. In this case, the RUs perform the operation of Layer 1 (L1) of the OSI 7-layer model.

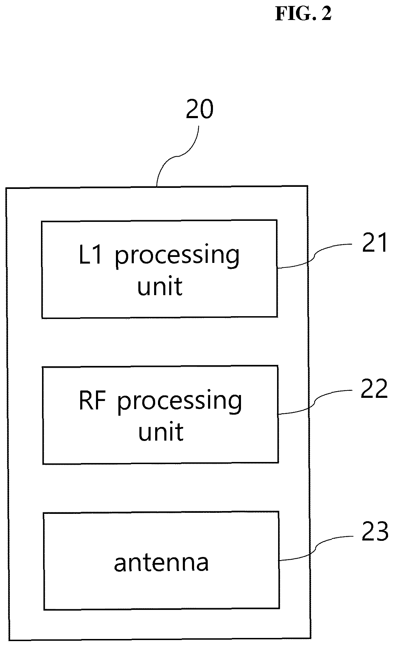

FIG. 2 is a diagram showing the internal configuration of each of the RUs 20.

As shown in FIG. 2, the RU 20 includes at least one L1 processing unit 21 and at least one RF processing unit 22. The RU may further include at least one antenna 23.

The L1 processing unit 21 performs the operation of L1 of the OSI 7-layer model, and may simultaneously perform the operation of L1 for a plurality of pieces of data.

The RF processing unit 22 performs an RF processing function, i.e., a radio signal conversion function for radio communication with corresponding user equipment 40. The RF processing unit 22 may also simultaneously perform RF processing for a plurality of frequency bands.

The antenna 23 functions to transmit a radio signal, processed by the RF processing unit 22, to the user equipment 40, or functions to receive a radio signal from the user equipment 40 and transfer the radio signal to the RF processing unit 23. The antenna 23 may include two or more antennas in order to support MIMO (SU-MIMO/MU-MIMO) or diversity.

In the present invention, the RU 20 may have at least two operation modes. One of the modes is a normal base station transmission mode, and the other one is a sniffering mode. The RU 20 may perform a base station signal reception operation in the sniffering mode like the user equipment 40, and may support the initial configuration of an SON process, the optimization of operation, etc. via the sniffering mode.

The transport network 30 may be a 3-layer network such as an IP network, or may be a 2-layer network such as an Ethernet or the like. Alternatively, the transport network 30 may be constructed using another wired/wireless communication method.

The BU 10 and the RU 20 configured as described above use respective ID identifiers and one or more addresses on the transport network in order to communicate with each other over the transport network 30.

First, when the transport network 30 is an L3 IP network, the BU 10 and the RU 20 have unique unicast IP addresses on the transport network, and use one or more multicast IP addresses.

When the transport network 30 is an L2 Ethernet, the BU 10 and the RU 20 have unique Media Access Control (MAC) addresses on the transport network, and use one or more multicast MAC addresses.

The exchange of data between the BU 10 and the RU 20 conforms with interface specifications between L2 and L1. Data exchanged in conformity with the interface specifications is composed of burst data, for example, a TB in the case of LTE, and control data.

In the radio base station 100, a flow through which a radio signal is transmitted to the user equipment 40 via a downlink is as follows. The BU 10 performs L3 and L2 operations on downlink data received from a core network, and transfers the resulting downlink data to one or more RUs 20 over the transport network 30, and each of the RUs 20 performs an L1 operation on the data received from the BU 10, converts the received data into a radio signal via the RF processing unit 22, and transmits the radio signal to one or more of the pieces of user equipment 40 through the antenna 23.

Meanwhile, the processing of uplink data transferred from one of the pieces of user equipment 40 to the core network is as follows. One or more RUs 20 perform an L1 operation on signals, received from the user equipment 40 through antennas 23, via RF processing units 22, and transmit resulting signals to one or more BUs 10 over the transport network 30. The BUs 10 combine or select one or more pieces of uplink data transferred from the RUs 20, perform L2 and L3 operations on resulting data, and transfer processed resulting data to the core network.

Meanwhile, the BUs 10 and the RUs 20 may use a security enhancement technique suitable for the transport network, such as IPSec or the like, in order to perform enhanced security data transmission and reception over the transport network 30.

Although data between an RU and a BU 10 is an encoded radio signal in a common radio base station, data between the BUs 10 and the RUs 20 conforms with the interface specifications between L2 and L1 according to the present invention, and thus a transmission band required for the transmission of the data between the BUs 10 and the RUs 20 can be reduced.

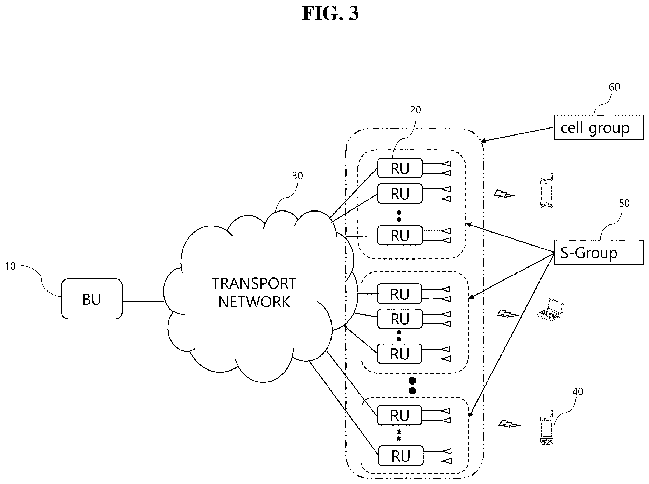

FIG. 3 is a diagram illustrating the configuration of a distributed radio base station 100 according to an embodiment of the present invention.

Referring to FIG. 3, it can be seen that one or more RUs 20 are grouped and form an RU group 50 (hereinafter referred to as the "S-group"). Furthermore, in FIG. 3, three S-groups 50 form a single cell group 60.

The cell group 60 performs the function of a cell in a common radio communication system, which can be logically identified by pieces of user equipment 40. The cell group 60 is coupled to a single BU 10 over a transport network 30, and may be dynamically constructed by the BU 10. The S-groups 50 refer to groups of RUs each including one or more selected RUs 20 within the single cell group, and enable the RUs 20, required for communication with specific user equipment 40, to be selectively/limitedly operated. The S-groups 50 may be dynamically constructed, which facilitates interference control between cells, the reuse of physical radio resources through spatial segmentation within a cell, and dynamic cell construction.

The S-groups 50 may be constructed using various methods.

A first method is a method of segmenting a physical space into one or more S-groups 50 based on the physical space of a target area that will be served by the cell group 60. In this case, segment physical spaces may overlap each other. Each of the segment physical spaces is a set of RUs 20 supporting each physical space, and may form an S-group.

For example, in connection with the segmentation of a physical space, when a service is constructed within a high-rise building, each floor may be configured as a single S-group 50 and the overall building may be served using a plurality of S-groups 50.

A second method is a method of forming an S-group 50 for each piece of user equipment 40, which may be performed by a method described below.

Each RU 20 receives the uplink data (an uplink random access signal, a channel state information transmission signal, a paging response signal, an uplink terminal reference signal, or the like) of user equipment 40, and transmits the received uplink data to the BU 10. The BU 10 may collect the uplink data and information of the user equipment 40 received from one or more RUs 20, and may form an S-group 50 supporting the specific user equipment 40 by considering channel states between the RUs 20 and the user equipment 40.

Meanwhile, the S-group 50 may dynamically change according to a spatial segmentation policy or the movement of the user equipment 40. The distributed radio base station 100 according to the present invention may be constructed, maintained and managed as one or more S-groups 50 based on spatial segmentation and one or more S-groups 50 based on respective pieces of user equipment 40 in combination. Furthermore, a radio multicast/broadcast service (for example, the eMBMS service of LTE, or the like) may use S-groups 50 based on spatial segmentation or a cell group 60, and a unicast service for specific user equipment 40 may use an S-group 50 for each piece of user equipment 40 or spatial segmentation-based S-groups 50/a cell group 60.

When the S-group 50 for each piece of user equipment 40 is used for a unicast service, an effect is achieved in that interference between S-groups 50 or cell groups 60 can be controlled by transmitting a radio signal to the user equipment 40 only via required RUs 20.

Meanwhile, a single RU 20 may belong to one or more S-groups 50, and may belong to one or more cell groups 60. Furthermore, each S-group 50 may also belong to one or more cell groups 60.

Meanwhile, the S-group 50 may be changed to be dynamically formed. The dynamic formation of the S-group 50 is similar to the selection of an antenna group in a distributed antenna system. However, the dynamic formation of the S-group 50 is different from the selection of an antenna group in a distributed antenna system in that the dynamic formation can perform efficient processing by distributing RF data processing requiring a high computational load among individual RUs 20 through the grouping of distributed RUs 20 including an L1 operation in place of antennas and in that the dynamic formation enables a required transport network bandwidth between the RUs 20 and a BU 10 to be reduced and also enables a transport network delay time requirement therebetween to be loosely managed.

Furthermore, each RU 20 within the S-group 50 includes a minimum of two antennas, and is distinctive in that the RU 20 independently performs the SU-MIMO/MU-MIMO operation of a common each cell through the performance of an L1 operation. Each RU 20 may belong to one or more S-groups 50, and may belong to one or more cell groups 60.

Each BU 10 may be connected to RUs 20 belonging to a single cell group 60 via the transport network 30, and may perform the function of a radio base station. Each BU 10 may transfer data to one specific RU 10 of the corresponding cell group 60. Furthermore, each BU 10 may transfer the same data to all RUs 20 belonging to a specific S-group 50, and may transfer the same data to all the RUs 20 belonging to the specific cell group 60.

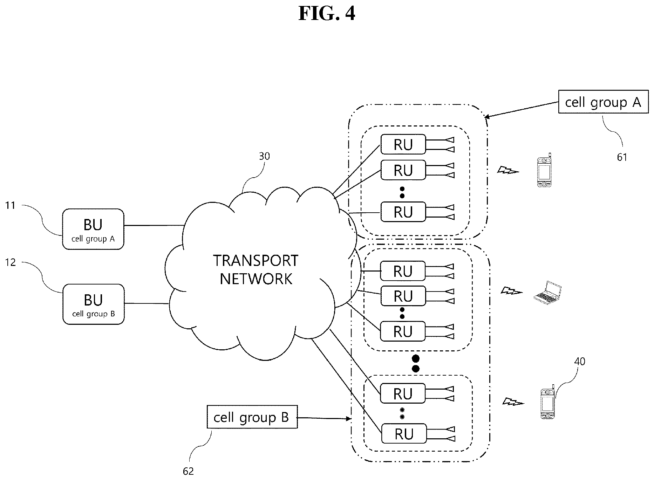

FIG. 4 is a diagram illustrating a method of dynamically constructing S-groups 50 and cell groups 60.

In FIG. 3, an example of the cell group 60 connected to the single BU 10 and an example of the plurality of S-groups 50 constituting the cell group 60 are shown. In this state, each of the RUs 20 is connected only to one of the S-groups 50 and the one cell group 60.

For example, when the distributed radio base station 100 according to the present invention is installed in a high-rise building, a single S-group 50 may be composed of a group of RUs 20 that serve one floor within a building. In order to serve a plurality of floors, a plurality of S-groups 50, one for each floor, may be constructed, and the overall building may be served using the same cell group 60 using a single BU 10. Furthermore, the S-groups 50 and the cell group 60 may be dynamically reconstructed. FIG. 4 shows an example of splitting a cell or an example of merging cells through the dynamic construction of cell groups 60.

Initially, a single cell group 60 is formed using a single BU 10, and the target service areas of all S-groups 50 are supported via the single cell group 60, as shown in FIG. 3. Thereafter, when the service capacity of the target area needs to increase due to an increase in users, a plurality of cell groups (a cell group A 61, and a cell group B 62) may be constructed by splitting the existing cell group, a BU may be added, and a plurality of cells may be operated via a plurality of BUs 11 and 12 corresponding to the respective cell groups, as shown in FIG. 4.

Furthermore, in the case of a decrease in required service capacity or the like, a plurality of separate cell groups, such as those of FIG. 4, may be merged into a single cell group 60, such as that of FIG. 3.

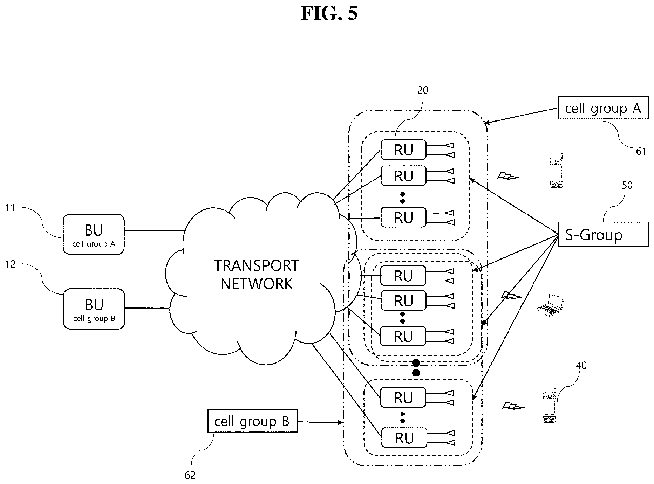

FIG. 5 is a diagram showing the configuration of a distributed radio base station 100 according to another embodiment of the present invention.

Although the distributed radio base station 100 of FIG. 5 is basically the same as that of FIG. 4, they are different in that each RU 20 may belong to a plurality of S-groups 50 and a plurality of cell groups 61 and 62, the S-groups 50 may overlap each other, and the cell groups 60 may overlap each other.

That is, one of the S-groups 50 may belong to the plurality of cell groups 61 and 62, and thus each RU 20 included in the corresponding S-group 50 may belong to the plurality of cell groups 61 and 62.

Next, a method of processing data in the distributed radio base station 100 according to the present invention, such as that described above, will be described.

First, when the transport network 30 is an L3 IP network, each RU 20 has a unicast IP address unique to the transport network 30, and uses a number of S-group IP multicast addresses equal to the number of participating S-groups 50 and a cell group IP multicast address unique to a cell group 60.

Each BU 10 has a unicast IP address unique to the transport network 30, and uses a number of S-group IP multicast addresses equal to the number of supporting S-groups 50 and a cell group IP multicast address unique to the cell group 60.

There are at least two methods by which a BU 10 transmits the same data to all RUs 20 that belong to a specific S-group 50.

A first method is a method in which the BU 10 transmits the same data to individuals RU 20 by using a plurality of IP unicast packets having the unique unicast IP addresses of the respective RU 20 as destination addresses.

A second method is a method in which the BU 10 transmits the same data by using a single IP multicast packet having a corresponding S-group IP multicast address as a destination address.

To transmit the same data to all RUs 20 belonging to a specific cell group 60, the BU 10 transmits the data by using an IP multicast packet having a corresponding cell group IP multicast address as a destination address.

Meanwhile, when the transport network 30 is an L2 Ethernet, each RU 20 has a unique unicast MAC address, and uses a number of S-group multicast MAC addresses equal to the number of participating S-groups 50 and a cell group multicast MAC address unique to a cell group 60.

Each BU 10 has a unique unicast MAC address, and uses a number of S-group multicast MAC addresses equal to the number of supporting S-groups 50 and a cell group multicast MAC address unique to the cell group 60.

There are at least two methods by which a BU 10 transmits the same data to all RUs 20 belonging to a specific S-group 50.

A first method is a method in which the BU 10 transmits the same data to the individual RUs 20 by using a plurality of Ethernet unicast frames having the unique unicast MAC addresses of the respective RUs 10 as destination addresses.

A second method is a method in which the BU 10 transmits data by using an Ethernet multicast frame having a corresponding S-group multicast MAC address as a destination address.

To transmit the same data to all RUs 10 belonging to a specific cell group 60, the BU 10 transmits data by using an Ethernet multicast frame having a corresponding cell group multicast MAC address as a destination address.

Meanwhile, when another wired/radio communication method is used for the transport network, S-group multicasting and cell group multicasting may be supported using a method unique to the corresponding technology.

According to the above method, when the number of RUs 20 belonging to an S-group/a cell group is N, a multicast method may use a maximum of N times less transmission bandwidth of the transport network 30 than a unicast method.

Next, a method of processing data in the radio base station 100 according to the present invention will be described.

First, the radio base station 100 according to the present invention may perform a downlink transmission function similar to that of a Distributed Antenna System (DAS) for a specific band by using a single S-group 50 and RUs 20 belonging to a cell group 60.

A BU 10 transfers the same burst data to RUs 20 belonging to a specific S-group 50, and the corresponding RUs 20 process the burst data received from the BU 10 and transmit RF signals to the user equipment 40 by using the same physical frequency/time radio resources, thereby performing a downlink transmission function similar to the function of a single band DAS system within the corresponding S-group 50.

Furthermore, the same burst data is transferred to all the RUs 20 belonging to the specific cell group 60, and the corresponding RUs 20 process burst data transferred from the BU 10, and transmit RF signals to the user equipment 40 by using the same physical frequency/time radio resources, thereby performing a function similar to a single band DAS function within the corresponding cell group 60.

All the RUs 20 within the specific S-group 50/cell group 60 transmit the same RF signals to the user equipment 40, and thus the pieces of user equipment 40 of an area supported by the corresponding S-group 50/cell group 60 may enjoy diversity gain.

Meanwhile, when the BU 10 is connected to a plurality of S-groups 50, the BU 10 transfers different pieces of burst data to the respective S-groups 50, thereby implementing distributed Multiple User-Multiple Input/Multiple Output (MU-MIMO) or Space Division Multiple Access (SDMA).

For this purpose, the BU 10 has the function of scheduling overlapping physical frequency/time radio resources for pieces of user equipment 40 belonging to different S-groups 50.

The BU 10 allocates overlapping physical frequency/time radio resources to pieces of user equipment 40 belonging to different S-groups 50, thereby generating different pieces of burst data for the respective S-groups 50. The respective S-groups 50 process transferred different pieces of burst data and transmit the data to the different respective pieces of user equipment 40 by using overlapping physical frequency/time radio resources between the S-groups 50, thereby implementing distributed MU-MIMO/SDMA.

FIG. 6 is a diagram showing an example of implementing an MU-MIMO/SDMA function in the distributed radio base station 100 according to the present invention.

The distributed radio base station 100 of FIG. 6 is in a state in which a single cell group 60 composed of a set of three S-groups is connected to a single BU 10.

As shown in FIG. 6, when user equipment J 41 is located in an S-group A 51 and user equipment K 42 is located in an S-group B 52, the BU 10 generates two different pieces of data burst to be transmitted to the user equipment J 41 and the user equipment K 42 by using overlapping physical frequency/time radio resources.

Furthermore, the BU 10 transmits the data burst for the user equipment J 41 to the S-group A 51, and transmits the data burst for the user equipment K 42 to the S-group B 52. The S-groups A and B 51 and 52 transmit the data of the user equipment J 41 and the data of the user equipment K 42 by using overlapping physical frequency/time radio resources.

Meanwhile, in an uplink case, uplink distributed MU-MIMO may be implemented by allocating uplink physical radio resources to different pieces of user equipment 40 in a manner similar to that of a downlink case. A method by which each of the pieces of user equipment 40 processes uplink data to be transmitted to the BU 10 is as follows.

When user equipment 40 within the service area of a specific S-group 50 wirelessly transmits uplink data, one or more RUs 20 within the corresponding S-group 50 receive the uplink data, and perform RF processing and L1 operation. Furthermore, the one or more RUs 20 transmit the processed uplink data to the BU 10 connected to the corresponding S-group 50 over the transport network 30. The BU 10 selects or combines the uplink data received from the one or more RUs 20, performs L2 and L3 operations, and transmits the uplink data to a core network.

As described above, the distributed radio base station 100 according to the present invention may reuse the same physical frequency/time radio resources for the S-groups 50, thereby increasing the efficiency of physical radio resources.

Meanwhile, the BU 10 may form two or more S-groups 50 for a single piece of user equipment 40, thereby implementing distributed Spatial Multiplexing Single User-Multiple Input/Multiple Output (SM SU-MIMO) for the single piece of user equipment 40. In this case, each of the S-groups 50 may support one or more MIMO streams for corresponding user equipment 40, and selected two or more S-groups 50 may be combined together and support a plurality of MIMO streams for the corresponding user equipment 40, thereby implementing distributed SM SU-MIMO.

Furthermore, each of the S-groups 50 may independently use an SU-MIMO or MU-MIMO technique for one or more pieces of user equipment 40 within the service area of the corresponding S-group 50, thereby increasing the efficiency of the utilization of physical frequency/time radio resources.

As described above, the distributed MU-MUMO and SM SU-MIMO techniques between S-groups 50 in the distributed radio base station 100 according to the present invention have the advantage of being combined with an SU-MIMO/MU-MIMO technique within each S-group 50, thereby maximizing the efficiency of the utilization of physical frequency/time radio resources.

Next, a method of allocating resources for distributed MU-MIMO in the distributed radio base station 100 according to the present invention as described above will be described.

As described above, the distributed radio base station 100 according to the present invention allocates overlapping physical frequency/time radio resources to a plurality of pieces of user equipment 40 that is served by different S-groups 51 and 52, thereby implementing distributed MU-MIMO/SDMA.

To effectively support such distributed MU-MIMO/SDMA, signal interference between the S-groups 51 and 52 using overlapping physical radio resources needs to be equal to or lower than an appropriate level.

For the user equipment J 41 of the S-group A 51 and the user equipment K 42 of the S-group B 52 to use overlapping physical frequency/time radio resources, the signal interference of the S-group B 52 with the user equipment J 41 and the signal interference of the S-group A 51 with the user equipment K 42 need to be limitative.

When the BU 10 allocates resources by using distributed MU-MIMO, the BU 10 needs to consider signal interference between the S-groups 51 and 52. The BU 10 may allocate resources for distributed MU-MIMO by considering the signal interference between the S-groups 51 and 52 by means of the following method.

That is to say, information about the mutual signal interference between the S-groups 51 and 52 is acquired, overlapping resources are allocated to pieces of user equipment belonging to S-groups 51 and 52 whose signal interference is equal to or lower than the appropriate level, and non-overlapping resources are allocated to pieces of user equipment belonging to S-groups 51 and 52 whose signal interference is higher than the appropriate level.

In FIG. 6, the strength of radio signals transmitted from RUs 20 belonging to the S-group A 51 and received by RUs 20 belonging to the S-group B 52 in a sniffering mode may be used as an actual estimated value for the interference between the S-group A 51 and the S-group B 52. In this case, the signal interference between the S-groups has directivity.

That is to say, the signal interference of the S-group A 51 with the S-group B 52 and the signal interference of the S-group B 52 with the S-group J 51 may not be the same, and they need to be separately maintained and managed. Information about signal interference between S-groups may be acquired in a Self Organizing Network (SON) process. In the initial configuration step of the SON process, a process of measuring signal interference between S-groups is performed as follows:
1) All S-groups belonging to a single cell group are defined as a set S = {S_i}.
2) One S-group S_k is selected from the set S.
3) Downlink test data is transmitted only to RUs belonging to the S-group S_k.
4) All RUs not belonging to the S-group S_k operate in a sniffering mode, and transmit received data to a BU 10.
5) The BU 10 generates an S-group set D = {S_j}, to which RUs 20 having a value equal to or higher than specific received signal strength R belong, by using information about the RUs 20 having received the test data. The reception signal strength R is a system configuration parameter.
6) The BU 10 generates information about signal interference relationships between the S-group S_k and all S_j belonging to the set D = {S_j}.
7) The S-group S_k is removed from the set S. When another S-group remains in the set S, the process returns to the step 1) and continues. In contrast, when there is no remaining S-group, the process ends.

The information about the interference relationships between the S-groups acquired via the above-described process may be utilized when resources are allocated by a MAC scheduler as follows.

That is to say, the MAC scheduler generates a set of S-groups W = {S_k} to which pieces of user equipment in a scheduling waiting state belong. The MAC scheduler selects the largest set of S-groups F having no mutual signal interference relationship from the generated set of S-groups W. Then overlapping physical frequency/time radio resources may be allocated to S-groups belonging to the set of S-groups F by using distributed MU-MIMO/SDMA. Non-overlapping physical frequency/time radio resources are allocated to pieces of user equipment belonging to other S-groups.

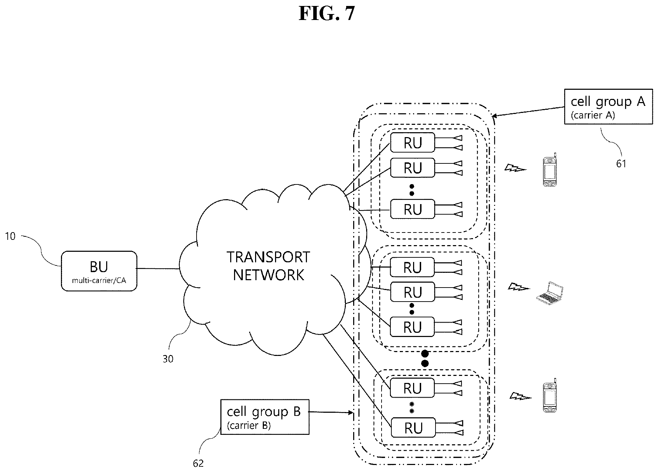

FIG. 7 is a diagram illustrating a multi-carrier/Carrier Aggregation (CA) function in the distributed radio base station 100 according to the present invention.

In the distributed radio base station 100 according to the present invention, a BU 10 may have a multi-carrier function and a Carrier Aggregation (CA) function. When each RU 20 has a plurality of L1 processing units and a plurality of RF processing units, RUs 20 may form S-groups 50 and cell groups 60 for respective carriers.

The BU 10 having a multi-carrier/CA function is connected to the cell groups 61 and 62/S-groups 50 of the RUs 20, formed for respective carriers, via a transport network, and performs a distributed multi-carrier/CA function.

In the example of FIG. 7, a distributed radio base station supporting two carriers (a carrier A and a carrier B) is constructed. The carriers A and B form the cell groups A 61 and B 62 for the respective carriers. The BU 10 supporting a multi-carrier/CA function may be connected to the cell groups/S-groups for the respective carriers, and may support a multi-carrier/CA service.

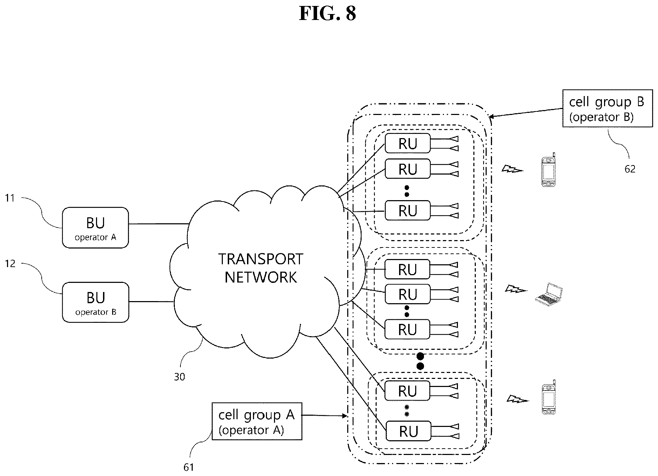

FIG. 8 is a diagram illustrating the function of supporting a plurality of communication operators in the radio base station 100 according to the present invention.

In the radio base station 100 according to the present invention, when an RU 20 has a plurality of L1 processing units and a plurality of RF processing units, a base station may be constructed for a plurality of different communication operators for respective frequency bands. In this case, the RU 20 is connected to a plurality of BUs 10 via different cell groups 61 and 62/S-groups 50, and the plurality of BUs 10 is connected to respective core networks of the different communication operators, thereby implementing services for the plurality of communication operators via the single RU 20.

FIG. 8 shows an example of constructing the radio base station 100 supporting communication operators A and B by using the same RUs 20.

As shown in FIG. 8, it can be seen that each RU 20 is configured to belong to the cell groups A 61 and B 62 formed in accordance with the respective communication operators A and B and to belong to two S-groups constituting respective parts of the cell groups A 61 and B 62. Furthermore, it can be seen that two BUs 11 and 12 are disposed in accordance with the respective cell groups.

As described above, the distributed radio base station 100 according to the present invention has the advantage of simultaneously providing the services of a plurality of communication operators via the single RU 20. Accordingly, compared to a current system in which a base station system is constructed for each communication operator, installation and maintenance costs can be considerably reduced.

Although the embodiments according to the present invention have been described above, it will be apparent that the present invention is not limited to the embodiments and various modifications/variations may be made within the scope of the present invention that is determined with reference to the attached claims and the accompanying drawings.

## Claims

1. A distributed radio base station, comprising:
one or more base units (BUs) configured to process digital signals; and
one or more radio units (RUs) installed in one or more target service areas, and configured to wirelessly communicate with user equipment;
wherein each of the BUs is coupled to a cell group, composed of a set of RU groups each formed by grouping one or more of the RUs, over a transport network, and transmits identical burst data to one of the RU groups or the cell group.

2. The distributed radio base station of claim 1, wherein one or more RUs belonging to the RU group or cell group process the received burst data, and transmit RF signals to the user equipment by using identical physical frequency/time resources.

3. The distributed radio base station of claim 1, wherein, when the cell group is composed of a set of a plurality of RU groups, the BU transmits different pieces of burst data to respective groups of RUs included in the RU groups.

4. The distributed radio base station of claim 3, wherein one or more RUs included in each of the RU groups process the received burst data, and transmit RF signals to the user equipment by using identical physical frequency/time resources.

5. The distributed radio base station of claim 1, wherein one or more RUs belonging to a specific one of the RU groups receive RF signals from the user equipment, perform RF processing and L1 operation, and then transmit processed data to a corresponding one of the BUs coupled over the transport network, and the BU selects or combines the data received from the one or more RUs.

6. The distributed radio base station of claim 1, wherein, when a single piece of user equipment is coupled to a plurality of RU groups, each of the RU groups supports one or more MIMO streams for the corresponding user equipment, and the individual RU groups are combined and then support a plurality of MIMO streams for the corresponding user equipment.

7. The distributed radio base station of claim 1, wherein overlapping physical frequency/time resources are allocated to a plurality of pieces of user equipment coupled to different RU groups by considering mutual signal interference between the RU groups.

8. The distributed radio base station of claim 7, wherein, for each of RU groups belonging to the cell group, test data is transmitted only to RUs belonging to a specific one of the RU groups, and the mutual signal interference is measured based on signal strength of the test data received by RUs, belonging to one or more RU groups exclusive of the specific RU group, in a sniffering mode.

9. A distributed radio base station, comprising:
one or more base units (BUs) configured to process digital signals; and
one or more radio units (RUs) installed in one or more target service areas, and configured to wirelessly communicate with user equipment;
wherein each of the RUs includes a plurality of L1 processing units and a plurality of RF processing units; and
wherein each of the BUs is coupled to a cell group, composed of a set of RU groups each formed by grouping one or more of the RUs, over a transport network, and the RU groups are grouped according to different respective carriers.

10. A distributed radio base station, comprising:
one or more base units (BUs) configured to process digital signals; and
one or more radio units (RUs) installed in one or more target service areas, and configured to wirelessly communicate with user equipment;
wherein each of the RUs includes a plurality of L1 processing units and a plurality of RF processing units; and
wherein each of the BUs is coupled to a cell group, composed of a set of RU groups each formed by grouping one or more of the RUs, over a transport network, and the RU groups are grouped according to different respective frequency bands.
